# EUROPÄISCHE PATENTANMELDUNG

(11) **EP 4 400 264 A1**
(43) Veröffentlichungstag der Anmeldung: **17.07.2024**
(21) Anmeldenummer: 23151247.6
(22) Anmeldetag: 12.01.2023
(51) Int. Cl.: B25D 17/04, B25F 5/00, F16J 15/02, F16J 15/10

(54) **ELEKTROHANDWERKZEUG**

(71) Anmelder: Hilti Aktiengesellschaft, 9494 Schaan (LI)
(72) Erfinder: Pötsch, Oliver, 86343 Königsbrunn (DE)
(74) Vertreter: Hilti Aktiengesellschaft Corporate Intellectual Property

(57) **Zusammenfassung**

Das erfindungsgemäße Elektrohandwerkzeug (10) weist zumindest zwei relativ zueinander beweglich gelagerte Geräteteile (1,2) auf, wobei ein erstes Geräteteil (1) eine Motor-Getriebeeinheit mit einer Werkzeugaufnahme umfasst und ein zweites Geräteteil (2) eine Griffeinheit umfasst. Das erste (1) und das zweite Geräteteil (2) sind über zumindest eine Vibrationsminderungsvorrichtung (4) miteinander gekoppelt und grenzen in einem Schnittstellenbereich (3) durch einen Luftspalt (31) beabstandet aneinander, wobei in dem Schnittstellenbereich (3) zumindest ein Dichtelement vorliegt, das eine Dichtschnur (6) aufweist, die einen elastischen Kern (62) sowie einen Dichtmantel (61) umfasst.

## Beschreibung

### GEBIET DER ERFINDUNG

Die vorliegende Erfindung betrifft ein Elektrohandwerkzeug, insbesondere einen Bohrhammer.

Bohrhämmer und andere Elektrohandwerkzeuge wie Bohrmaschinen, Säbelsägen, Kreissägen, Stichsägen, Kernbohrgeräte und/oder Abbruchhämmer (für Boden und Wände) werden fortwährend hinsichtlich Leistungs- und Gewichtsaspekten sowie Ergonomie weiter einwickelt. In puncto Ergonomie sind insbesondere die auf einen Anwender einwirkenden Vibrationsbelastungen ein Schwerpunkt der Entwicklungsanstrengungen. Unzulässig hohe Vibrationsbelastungen können, insbesondere bei Anwendern aus dem professionellen Bereich, schwere gesundheitliche Schäden, darunter die so genannte Weißfingerkrankheit, hervorrufen.

Daher sind Bohrhämmer und andere Elektrohandwerkzeuge bekannt, bei denen zwischen Handgriff und Motor-Getriebeeinheit Vorrichtungen zur Vibrationsminderung angeordnet sind. Derartige Vibrationsminderungsvorrichtungen sind dazu ausgebildet, eine Minderung der am Handgriff auftretenden Vibrationsbelastung zu bewirken, indem die Weiterleitung von Vibrationen der Motor-Getriebeeinheit möglichst breitbandig reduziert wird. Der Handgriff und die Motor-Getriebeeinheit sind hierbei in der Regel zueinander beweglich gelagert, wobei Feder- und/oder Dämpferelemente sowie ggf. Gleitelemente eingesetzt werden, die auf ein im Betrieb erwartbares Vibrationsspektrum angepasst sind. Der erforderliche Bewegungsspielraum wird durch einen Luftspalt realisiert, der zwischen Handgriff und Motor-Getriebeeinheit vorliegt. Da im Bereich des Luftspalts im Betrieb Relativbewegungen zwischen Handgriff und Motor-Getriebeeinheit auftreten, ist der Luftspalt mit einem Eingriffsschutz versehen, wozu häufig eine Balgabdichtung zum Einsatz kommt, die den Luftspalt im Bereich der Schnittstelle zwischen Handgriff und Motor-Getriebeeinheit voll- oder zumindest teilumfänglich umläuft.

Alternativ oder zusätzlich zu Feder und/oder Dämpferelementen zur Vibrationsentkopplung können in Elektrohandwerkzeugen auch Schwingungstilger zum Einsatz kommen, die in der Regel federnd gelagerte Gegengewichte aufweisen, um die im Betrieb betragsmäßig dominierenden Frequenzbereiche zu unterdrücken.

Eine Balgabdichtung des Luftspalts gewährleistet zwar einen wirksamen Eingriffsschutz und stellt auch eine zuverlässige partielle oder vollständige fluidische oder mechanische Abdichtung des Schnittstellenbereichs bereit, ist jedoch aufgrund vergleichsweise hoher innerer und/oder äußerer Reibung relativ steif, sodass über eine Balgabdichtung in einem nicht unbeträchtlichen Maß Schwingungen von der Motor-Getriebeeinheit auf den Handgriff übertragen werden, was der angestrebten Wirkung der Vibrationsminderungsvorrichtung zuwider läuft.

Aus dem Stand der Technik sind Elektrohandwerkzeuge mit Balgabdichtungen zur Schwingungsentkopplung von Vorrichtungsbestandteilen bekannt. Derartige Elektrohandwerkzeuge werden unter anderem in DE 10 2006 060 652 A1 und EP 1 637 288 B1 beschrieben.

Ferner wird bei bekannten Elektrohandwerkzeugen, etwa bei Bohrhämmern, über den Schnittstellenbereich zwischen Handgriff und Motor-Getriebeeinheit häufig ein Kühlluftstrom angesaugt, der zum Thermomanagement der elektrischen, elektronischen und/oder mechanischen Komponenten des Elektrohandwerkzeugs benötigt wird. Aus diesem Grund muss die Abdichtung des Luftspalts nicht nur einen Eingriffsschutz bereitstellen, sondern zusätzlich auch möglichst fluiddicht sein. Eine Luftführung innerhalb des Schnittstellenbereichs ist dabei häufig derart realisiert, dass der Schnittstellenbereich beispielsweise durch ein Luftschott aus einem geschlossenzelligen Schaummaterial in einen Unterdruckbereich und einen Überdruckbereich unterteilt ist, um Bypassströmungen zwischen einer Saugseite und einer Druckseite eines Kühlluftgebläses zu verhindern. Ein derartiges Luftschott stellt eine weitere unerwünschte Schwingungskopplung zwischen Handgriff und Motor-Getriebeeinheit dar.

Eine Aufgabe der vorliegenden Erfindung ist es daher, ein Elektrohandwerkzeug bereitzustellen, das sich durch eine verbesserte Schwingungsentkopplung des Handgriffs auszeichnet.

### OFFENBARUNG DER ERFINDUNG

Demgemäß wird ein Elektrohandwerkzeug, insbesondere ein Bohrhammer, vorgeschlagen, das zwei relativ zueinander beweglich gelagerte Geräteteile aufweist. Ein erstes Geräteteil umfasst eine Motor-Getriebeeinheit mit einer Werkzeugaufnahme und ein zweites Geräteteil eine Griffeinheit, wobei das erste und das zweite Geräteteil über zumindest eine Vibrationsminderungsvorrichtung miteinander gekoppelt sind und in einem Schnittstellenbereich durch einen Luftspalt beabstandet aneinander grenzen. In dem Schnittstellenbereich liegt zumindest ein Dichtelement vor, das eine Dichtschnur aufweist, die einen elastischen Kern sowie einen Dichtmantel umfasst.

Der Einsatz einer Dichtschnur im Schnittstellenbereich hat gegenüber einer Balgabdichtung den Vorteil, dass diese im Funktionskontakt nur eine sehr geringe Reibung verursacht, sodass die Schwingungsentkopplung des zweiten Geräteteils mit der Griffeinheit hierdurch signifikant verbessert wird. Durch eine geeignete fachmännische Auslegung der Dichtschnur hinsichtlich Abmessungen, Steifigkeit, Materialien des elastischen Kerns sowie des Dichtmantels lässt sich zudem die erforderliche Dichtigkeit erreichen und ein Eindringen von Partikeln in den Schnittstellenbereich wirksam verhindern.

Grundsätzlich gilt, dass sich für den Dichtmantel Kunststoffe mit guten Gleiteigenschaften besonders gut eignen. Der Dichtmantel kann als Vollmaterial oder in Form eines Fasergebildes vorliegen und den elastischen Kern außenliegend umgeben. Alternativ kann der Dichtmantel geschäumt sein, oder als dünner Film auf den elastischen Kern aufgetragen sein. Der elastische Kern stellt hierbei elastisch Rückstellkräfte bereit, die zur Erreichung einer Dichtwirkung unerlässlich sind, während der Dichtmantel für die eigentliche Abdichtungswirkung zuständig ist und selbst ein nur geringes Rückstellvermögen haben kann.

Ein Querschnitt der Dichtschnur kann in einem nicht verformten Ausgangszustand etwa kreisförmig, ellipsenförmig oder polygonal sein.

Die Dichtschnur kann insbesondere in einer Aufnahmenut des ersten und/oder zweiten Geräteteils aufgenommen sein. Die Aufnahmenut begrenzt die Verformung der Dichtschnur auf eine Wirkrichtung und kann bei einer Fertigung des ersten und/oder zweiten Geräteteils als Kunststoffspritzgußteil(e) kosten- und aufwandsneutral erzeugt werden.

Gemäß einer vorteilhaften Weiterbildung kann der Dichtmantel der Dichtschnur ein Fasermantel sein, der um den elastischen Kern gewickelt und/oder geflochten ist, insbesondere kreuzförmig gewickelt und/oder geflochten. Alternativ kann der Dichtmantel jedoch auch auf den Kern beschichtet, aufgetragen, angeschäumt oder anderweitig mantelförmig auf dem Kern angebracht sein.

Alternativ oder zusätzlich kann der elastische Kern hohl sein, wodurch einerseits Material eingespart werden kann und andererseits das Rückstellvermögen verbessert sowie die Dichtungsreaktionskräfte verringert werden können.

Der Fasermantel der Dichtschnur kann eine Vielzahl insbesondere synthetischer Fasern aufweisen, wobei die Fasern insbesondere ein Polyamid, etwa ein Aramid, oder Polytetrafluorethylen umfassen oder daraus bestehen können. Die Erfindung ist jedoch ausdrücklich nicht auf vorgenannte Werkstoffe beschränkt, sondern umfasst auch andere, dem Fachmann geeignete Materialien, die vergleichbar vorteilhafte Gleit- und Dichteigenschaften besitzen.

Der elastische Kern der Dichtschnur kann ein Elastomer, ein thermoplastisches Elastomer oder einen Kautschuk umfassen oder daraus bestehen, insbesondere ein Polyurethan oder ein Ethylen-Propylen-Dien-Kautschuk. Die Erfindung ist jedoch ausdrücklich nicht auf vorgenannte Werkstoffe beschränkt, sondern umfasst auch andere, dem Fachmann geeignete Materialien, die vergleichbar vorteilhafte Rückstelleigenschaften besitzen.

Eine insbesondere geeignete Dichtschnur ist unter der Handelsmarke "Elastic Tankpak" des Herstellers EagleBurgmann Germany GmbH & Co. KG, 82515 Wolfratshausen (Deutschland) bekannt. Eine solche Dichtschnur in einem Durchmesserbereich von ca. 5 bis 20 mm ist optimal für das erfindungsgemäße Elektrohandwerkzeug geeignet.

In einer bevorzugten Ausführungsform umfasst das Elektrohandwerkzeug ein Gehäuse mit einem ersten Gehäuseteil, das das erste Geräteteil bildet, und mit einem zweiten Gehäuseteil, das das zweite Geräteteil bildet. Gemäß dieser Ausführungsform liegt der Schnittstellenbereich daher zwischen zwei Teilen des Gehäuses vor, sodass durch die Dichtschnur zwei Gehäuseteile gegeneinander abgedichtet werden.

In einer alternativen Ausführungsform umfasst das Elektrohandwerkzeug ein Sub-Chassis, das die Motor-Getriebeeinheit mit der Werkzeugaufnahme umfasst und das erste Geräteteil bildet, sowie ein Gehäuse, in dem das Sub-Chassis angeordnet ist und das das zweite Geräteteil bildet. Gemäß dieser Ausführungsform liegt der Schnittstellenbereich daher innerhalb des Gehäuses vor, wobei die Dichtschnur das Sub-Chassis gegenüber dem Gehäuse abdichtet. In diesem Fall kann das Gehäuse selbst ohne äußeren Luftspalt und/oder ohne eine Zweiteilung zwischen "Griff" und "Gerät" ausgeführt sein.

Unter einem Sub-Chassis wird ein Vorrichtungsbestandteil des Elektrohandwerkzeugs verstanden, der die antriebsrelevanten Komponenten, beispielsweise Getriebe-/Antriebs-/Schlagwerkseinheit, aufweist und seinerseits gegenüber dem Gehäuse beweglich entkoppelt gelagert ist, wobei zur Entkopplung beispielsweise Federn, Gleitlager, Schaumstoffe oder dergleichen zum Einsatz kommen. Nach außen bildet das Gehäuse insbesondere eine Einheit und ist in sich unbeweglich bzw. stationär. Das Gehäuse bildet gemäß dieser Ausführungsform gewissermaßen eine Schalung, innerhalb der sich das Sub-Chassis entkoppelt gelagert bewegen kann, wodurch eine besonders wirksame Vibrationsentkopplung der antriebsrelevanten Komponenten erreicht wird und die Steifigkeit des Gehäuses erhöht werden kann.

Gemäß einer weiteren Ausführungsform liegt innerhalb des Gehäuses eine Fluidführungsanordnung, insbesondere Luftführungsanordnung, vor, die einen insbesondere mit der Motor-Getriebeeinheit gekoppelten Luftstromerzeuger - etwa ein Kühlluftgebläse - umfasst. Die Fluidführungsanordnung, insbesondere Luftführungsanordnung, weist einen Ansaugfluidpfad, insbesondere Ansaugluftpfad, auf, der zumindest abschnittsweise durch den Schnittstellenbereich verläuft. Damit stellt die Fluidführungsanordnung, insbesondere Luftführungsanordnung, ein Kühlsystem dar, über das das Thermomanagement der elektrischen, elektronischen und/oder mechanischen Komponenten des Elektrohandwerkzeugs realisiert wird um Überhitzung zu vermeiden und im Betrieb des Elektrohandwerkzeugs anfallende Wärmelasten nach außerhalb des Gehäuses abzuführen. Da der Ansaugfluidpfad, insbesondere Ansaugluftpfad, zumindest abschnittsweise durch den Schnittstellenbereich verläuft, ist die Dichtschnur im Bereich des Schnittstellenbereichs an der Abdichtung des Ansaugfluidpfads, insbesondere Ansaugluftpfads, beteiligt.

In Ausführungsformen ist es auch möglich, dass die Fluidführungsanordnung einen Abluftpfad aufweist, der zumindest abschnittsweise durch den Schnittstellenbereich verläuft, sodass die Dichtschnur im Bereich des Schnittstellenbereichs dann an der Abdichtung eine solchen Abluftpfads beteiligt ist.

Bei Ausführungen, die ein Sub-Chassis umfassen kann die Dichtschnur ferner vorteilhaft dazu eingerichtet sein, einen Ansaugluftpfad von einem Abluftpfad zu trennen.

In Ausführungen kann die Luftführungsanordnung zumindest eine Ansaugöffnung in dem Gehäuse umfassen, die fluidisch mit dem Ansaugluftpfad verbunden ist. Genauer liegt die Ansaugöffnung stromaufwärts des Schnittstellenbereichs vor. Insbesondere kann die Ansaugöffnung in dem zweiten Gehäuseteil vorliegen.

Ferner kann in Ausführungen innerhalb des Gehäuses eine operativ mit der Motor-Getriebeeinheit gekoppelte Elektronikbaugruppe vorliegen, die zumindest abschnittsweise in dem Ansaugfluidpfad, insbesondere Ansaugluftpfad, liegt. Insbesondere kann die Elektronikbaugruppe in dem zweiten Gehäuseteil vorliegen. Die Elektronikbaugruppe ist hierbei in einem Betriebszustand des Elektrohandwerkzeugs von einem durch den Ansaugfluidpfad, insbesondere Ansaugluftpfad, geführten Luftstrom, insbesondere Kühlluftstrom, überstreichbar, sodass in der Elektronikbaugruppe entstehende Wärmelasten wirksam abgeführt werden können. Die Elektronikbaugruppe kann beispielsweise einen Schalter, eine Steuerungs- und/oder Regelungsvorrichtung, insbesondere umfassend Leistungselektronik, aufweisen. Die Elektronikbaugruppe kann zumindest einen Kühlkörper aufweisen, um einen Wärmeübertrag auf den Kühlluftstrom zu verbessern. In einer besonderen Ausführungsform kann die Elektronikbaugruppe in einem so genannten entkoppelten Handgriff angeordnet sein.

Gemäß einer noch weiteren Ausführungsform kann in dem Schnittstellenbereich ein Unterdruckbereich, aufweisend einen Abschnitt des Ansaugfluidpfads, insbesondere Ansaugluftpfads, sowie ein Überdruckbereich vorliegen. Der Überdruckbereich kann hierbei einen Abschnitt eines Druckluftpfads aufweisen. Der Unterdruckbereich und der Überdruckbereich sind hierbei durch ein Luftschott getrennt. Das Luftschott kann eine Dichtschnur umfassen, die einen elastischen Kern sowie einen Dichtmantel aufweist. Der Unterdruckbereich befindet sich insbesondere an einer Saugseite des Luftstromerzeugers während der Überdruckbereich an einer Druckseite des Luftstromerzeugers vorliegt.

Indem das Luftschott mit einer Dichtschnur anstelle des im Stand der Technik gebräuchlichen geschlossenzelligen Schaummaterials ausgeführt wird, kann die Schwingungsentkopplung des zweiten Geräteteils, insbesondere des zweiten Gehäuseteils, mit der Griffeinheit noch weiter verbessert werden. Die Dichtschnur des Luftschotts kann hierbei entweder an dem ersten Geräteteil oder an dem zweiten Geräteteil angeordnet sein, wobei das jeweils andere Geräteteil eine korrespondierende Kontaktfläche bereitstellt, mit der die Dichtschnur in Dichtkontakt steht.

Alternativ oder zusätzlich kann in dem Schnittstellenbereich eine Umfangsdichtung vorliegen, die das erste und das zweite Geräteteil zumindest teilumfänglich, insbesondere jedoch vollumfänglich, gegeneinander abdichtet, wobei insbesondere die Umfangsdichtung eine Dichtschnur aufweist, die einen elastischen Kern sowie einen Dichtmantel umfasst.

Insbesondere dichtet die Umfangsdichtung das erste und das zweite Gehäuseteil zumindest teilumfänglich, insbesondere jedoch vollumfänglich, gegeneinander ab.

Eine als Dichtschnur ausgeführte Umfangsdichtung im Schnittstellenbereich hat eine deutlich geringere Reibung als die im Stand der Technik übliche Balgabdichtung, sodass die Schwingungsentkopplung des zweiten Geräteteils mit der Griffeinheit noch weiter verbessert werden kann.

In Ausführungen kann im Schnittstellenbereich ergänzend ein Übergriffsbereich vorgesehen sein, der sich über den Luftspalt hinweg von einem Geräteteil zu dem anderen Geräteteil erstreckt und die Dichtschnur hierbei überlappt, sodass diese vor direkten externen mechanischen Einwirkungen geschützt ist und der Eingriffsschutz verbessert ist. Zudem fungiert ein derartiger Übergriffsbereich gewissermaßen als Labyrinthdichtung, sodass die Dichtwirkung der Dichtschnur hierdurch weiter verbessert werden kann. Der Übergriffsbereich kann als ein an einem Geräteteil ausgebildeter, den Schnittstellenbereich umlaufender Kragen ausgebildet sein, der sich zu dem anderen Geräteteil erstreckt, wobei das andere Geräteteil in einem von dem Kragen umschlossenen Bereich aufgenommen ist. Die Dichtschnur der Umfangsdichtung kann hierbei entweder an dem ersten Geräteteil oder an dem zweiten Geräteteil angeordnet sein, wobei das jeweils andere Geräteteil eine korrespondierende Kontaktfläche bereitstellt, mit der die Dichtschnur in Dichtkontakt steht.

In einer weiteren Ausführungsform kann die Fluidführungsanordnung, insbesondere Luftführungsanordnung, zumindest eine Ansaugluftleitung aufweisen, die sich in dem Schnittstellenbereich zumindest abschnittsweise von dem ersten in das zweite Geräteteil oder von dem zweiten in das erste Geräteteil erstreckt und dabei den Luftspalt überbrückt. Durch die Ansaugluftleitung verläuft ein Abschnitt des Ansaugfluidpfads, insbesondere Ansaugluftpfads. Bevorzugt ist die Ansaugluftleitung gegenüber dem Geräteteil, in das diese sich erstreckt, durch eine Dichtschnur abgedichtet, die einen elastischen Kern sowie einen Dichtmantel umfasst.

Vorteilhafterweise liegt der Luftspalt des Schnittstellenbereichs gemäß dieser Ausführungsform nicht im Ansaugfluidpfads, insbesondere Ansaugluftpfad, sodass eine Trennung des Schnittstellenbereichs in Unterdruckbereich und Überdruckbereich nicht erforderlich ist und in der Folge das Luftschott entfallen kann. Gemäß dieser Ausführungsform ist daher der positive Effekt auf die Schwingungsentkopplung des zweiten Geräteteils umfassend die Griffeinheit maximiert.

Für alle hierin beschriebenen möglichen Anordnungen bzw. Einsatzzwecke der Dichtschnur im Schnittstellenbereich gilt, dass der Dichtkontakt insbesondere radial erfolgen kann.

In Ausführungen kann das zweite Geräteteil zumindest entlang einer Werkzeugachse der Motor-Getriebeeinheit gegenüber dem ersten Geräteteil beweglich gelagert sein. Insbesondere kann die Werkezugachse eine Längsachse des Elektrohandwerkzeugs sein, sodass das zweite Geräteteil zumindest mit einer Bewegungskomponente in oder parallel zur Längsachse gegenüber dem ersten Geräteteil beweglich ist. Die Beweglichkeit des zweiten Geräteteil gegenüber dem ersten Geräteteil kann aber auch eine Komponente quer zur Längsachse umfassen, wenn auch mit einem geringeren Betrag. In Ausführungen umfassend ein Sub-Chassis, das das erste Geräteteil bildet, kann das erste Geräteteil zumindest entlang einer Werkzeugachse der Motor-Getriebeeinheit gegenüber dem Gehäuse, das das zweite Geräteteil bildet, beweglich gelagert sein.

In Ausführungen kann die Vibrationsminderungsvorrichtung zumindest ein Federelement umfassen, das sich einenends an dem ersten Geräteteil und anderenends an dem zweiten Geräteteil abstützt. Die Abstützung des Federelements an den Geräteteilen kann unmittelbar oder mittelbar erfolgen, sprich unter Zwischenschaltung von zusätzlichen Vorrichtungsbestandteilen, die einen Kraftfluss zum respektive vom Federelement leiten.

Das zumindest ein Federelement kann sich beispielsweise entlang der Werkzeugachse der Motor-Getriebeeinheit erstrecken. In Ausführungen handelt es sich bei dem Federelement um eine Druckfeder, insbesondere eine Schraubenfeder. In anderen Ausführungen kann das Federelement aber auch als Torsionsfeder ausgebildet sein. Das Federelement kann alternativ oder zusätzlich einen Schaumstoff aufweisen oder daraus bestehen.

Ferner kann die Vibrationsminderungsvorrichtung zumindest ein Dämpfungselement umfassen, das sich einenends an dem ersten Geräteteil und anderenends an dem zweiten Geräteteil abstützt. Das Dämpfungselement ist dazu ausgebildet, vom Federelement aufgenommene Bewegungsenergie zu dissipieren, sodass ein unkontrolliertes Aufschwingen vermieden werden kann,

In Ausführungen kann das zweite Geräteteil, insbesondere das zweite Gehäuseteil, über zumindest ein Gelenk schwenkbar an dem ersten Geräteteil, insbesondere dem ersten Gehäuseteil, gelagert sein, wobei insbesondere das Gelenk das Dämpfungselement, insbesondere in Form eines Rotationsdämpfungselements, umfasst. Das Rotationsdämpfungselement kann insbesondere ein Kunststoffmaterial aufweisen oder daraus bestehen, wobei das Kunststoffmaterial insbesondere eine hohe innere Dämpfung bereitstellen kann.

Gemäß einer noch weiteren Ausführungsform kann zumindest ein Bestandteil der Vibrationsminderungsvorrichtung in dem Schnittstellenbereich vorliegen. Insbesondere kann das zumindest eine Federelement und/oder das zumindest eine Dämpfungselement der Vibrationsminderungsvorrichtung in dem Schnittstellenbereich vorliegen. Alternativ kann eine mit dem zumindest einen Federelement und/oder dem zumindest einen Dämpfungselement der Vibrationsminderungsvorrichtung verbundene Kraftleitstruktur in dem Schnittstellenbereich vorliegen.

### KURZE BESCHREIBUNG DER FIGUREN

Die nachfolgende Beschreibung erläutert die Erfindung anhand von exemplarischen Ausführungsformen und Figuren. In den Figuren zeigt:
- Fig. 1: eine schematische Längsschnittansicht eines erfindungsgemäßen Elektrohandwerkzeugs gemäß einer ersten Ausführungsform;
- Fig. 2: eine schematische Längsschnittansicht eines erfindungsgemäßen Elektrohandwerkzeugs gemäß einer zweiten Ausführungsform;
- Fig. 3: eine schematische Längsschnittansicht eines erfindungsgemäßen Elektrohandwerkzeugs gemäß einer dritten Ausführungsform;
- Fig. 4: Detail A aus Fig. 4;
- Fig. 5: Detail A aus Fig. 4 in einer isometrischen Ansicht; und
- Fig. 6: Detailansicht einer Dichtschnur eines erfindungsgemäßen Elektrohandwerkzeugs.

Gleiche oder funktionsgleiche Elemente werden durch gleiche Bezugszeichen in den Figuren indiziert, soweit nichts anderes angegeben ist.

### AUSFÜHRUNGSFORMEN DER ERFINDUNG

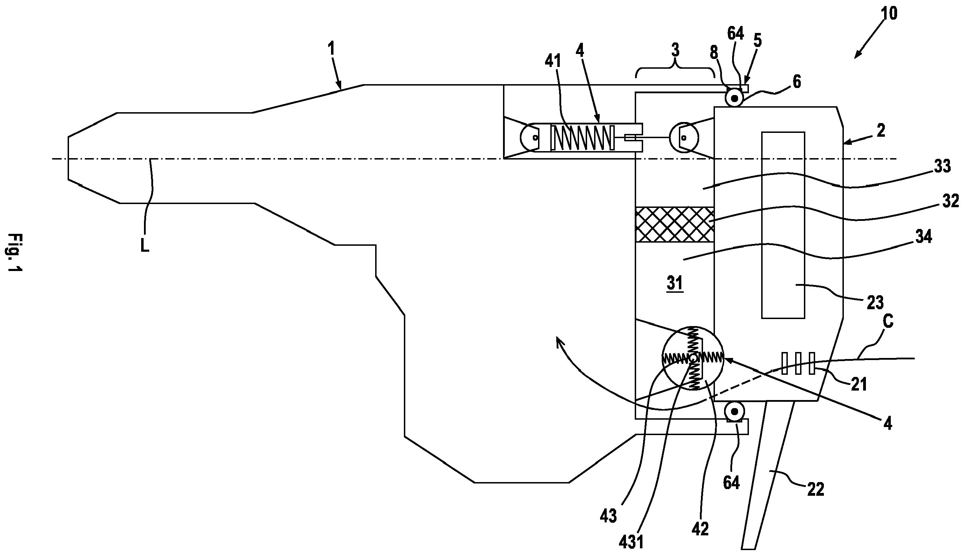

**Fig. 1** zeigt ein erfindungsgemäßes Elektrohandwerkzeug 10 in Form eines Bohrhammers 10 in einer ersten Ausführungsform in einem schematischen Längsschnitt. Der Bohrhammer 10 weist ein Gehäuse und zwei relativ zueinander beweglich gelagerte Geräteteile 1,2 auf. Ein erstes Geräteteil 1 ist als erstes Gehäuseteil 1 umfassend eine Motor-Getriebeeinheit mit einer Werkzeugaufnahme (nicht dargestellt) ausgebildet. Ein zweites Geräteteil 2 ist als zweites Gehäuseteil 2 umfassend eine Griffeinheit ausgebildet.

In der folgenden Beschreibung der Figuren wird für die Geräteteile 1,2 durchgängig der Begriff Gehäuseteile 1,2 verwendet, was die Erfindung jedoch explizit nicht hierauf einschränkt und lediglich einem besseren Verständnis der Ausführungsformen dient.

Das erste Gehäuseteil 1 und das zweite Gehäuseteil 2 sind über eine Vibrationsminderungsvorrichtung 4 miteinander gekoppelt und grenzen in einem Schnittstellenbereich 3 durch einen Luftspalt 31 beabstandet aneinander. Die Vibrationsminderungsvorrichtung 4 umfasst zumindest ein Druckfederelement 41, über das das zweite Gehäuseteil 2 federnd gegenüber dem ersten Gehäuseteil 1 gelagert ist. Ferner umfasst die Vibrationsminderungsvorrichtung 4 ein Dämpfungselement 42, welches als Rotationsdämpfungselement ausgeführt ist und in ein Gelenk 43 integriert ist, welches das zweite Gehäuseteil 2 schwenkbar mit dem ersten Gehäuseteil 1 koppelt. Das zweite Gehäuseteil 2 ist mittels des Gelenks 43 um den Drehpunkt 431 gegenüber dem ersten Gehäuseteil 1 schwenkbar. Folglich erlaubt die Vibrationsminderungsvorrichtung 4 einen Bewegungsfreiheitsgrad des zweiten Gehäuseteils 2 gegenüber dem ersten Gehäuseteil 1 zumindest entlang der Werkzeugachse bzw. Längsachse L des Elektrohandwerkzeugs 10, genauer eine Kipp-/Nickbewegung um den Drehpunkt 431.

Innerhalb des Gehäuses ist eine Luftführungsanordnung ausgebildet, die einen (nicht dargestellten) mit der (ebenfalls nicht dargestellten) Motor-Getriebeeinheit gekoppelten Luftstromerzeuger (ebenfalls nicht dargestellt) umfasst. Die Luftführungsanordnung umfasst einen Ansaugluftpfad C, der abschnittsweise durch den Schnittstellenbereich 3 verläuft. Mit anderen Worten erfolgt die Bereitstellung von Kühlluft durch den Ansaugluftpfad C durch den Schnittstellenbereich 3 bzw. den Luftspalt 31. Die Luftführungsanordnung stellt ein Kühlluftsystem dar, über das das Thermomanagement der elektrischen, elektronischen und/oder mechanischen Komponenten des Elektrohandwerkzeugs 10 realisiert wird um Überhitzung zu vermeiden und im Betrieb des Elektrohandwerkzeugs 10 anfallende Wärmelasten nach außerhalb des Gehäuses abzuführen.

Die Luftführungsanordnung bezieht die Kühlluft von außerhalb des Gehäuses, nämlich durch Ansaugöffnungen 21 in dem zweiten Gehäuseteil 2, die fluidisch mit dem Ansaugluftpfad C verbunden sind und sich stromaufwärts des Schnittstellenbereichs 3 befinden.

Der Schnittstellenbereich 3 ist durch ein Luftschott 32 in einen Unterdruckbereich 34, aufweisend einen Abschnitt des Ansaugluftpfads C, sowie einen Überdruckbereich 33 getrennt, um Bypassströmungen zwischen einer Saugseite und einer Druckseite des Luftstromerzeugers, beispielsweise umfassend ein Kühlluftgebläse, zu vermeiden. Der Unterdruckbereich 34 ist hierbei mit einer Saugseite des Luftstromerzeugers verbunden während der Überdruckbereich 33 mit einer Druckseite des Luftstromerzeugers verbunden ist. Das Luftschott 32 ist gemäß der ersten Ausführungsform aus einem insbesondere geschlossenzelligen Schaummaterial gebildet.

Um eine möglichst reibungsarme Abdichtung der beiden Gehäuseteile 1,2 im Schnittstellenbereich 3 zu erreichen, liegt im Schnittstellenbereich 3 eine Umfangsdichtung 5 vor, die die beiden Gehäuseteile 1,2 vollumfänglich gegeneinander abdichtet, wobei die Umfangsdichtung 5 eine Dichtschnur 6 aufweist. Hierdurch kann einerseits eine sichere Abdichtung des durch den Schnittstellenbereich 3 verlaufenden Abschnitts des Ansaugluftpfads C bzw. eines druckseitigen Abschnitts des Kühlluftpfads erreicht werden. Andererseits wird die Schwingungsentkopplung des zweiten Gehäuseteils 2 durch die sehr reibungsarme Dichtschnur 6 optimiert.

Um zu verhindern, dass größere Fremdkörper oder Körperteile wie Finger in den Schnittstellenbereich 3 gelangen, ist im Schnittstellenbereich 3 ein Übergriffsbereich 8 vorgesehen, der sich über den Luftspalt 31 hinweg vom ersten Gehäuseteil 1 zum zweiten Gehäuseteil 2 erstreckt und die Dichtschnur 6 überlappt, sodass diese vor direkten externen mechanischen Einwirkungen geschützt ist. Zudem fungiert der Übergriffsbereich 8 als Labyrinthdichtung, was die Dichtwirkung der Dichtschnur 6 weiter verbessert. Der Übergriffsbereich 8 ist als ein an dem ersten Gehäuseteil 1 ausgebildeter, den Schnittstellenbereich 3 umlaufender Kragen ausgebildet, der sich zum zweiten Gehäuseteil 2 erstreckt, wobei das zweite Gehäuseteil 2 in einem von dem Kragen umschlossenen Bereich aufgenommen ist. Die Dichtschnur 6 der Umfangsdichtung 5 ist hierbei an dem ersten Gehäuseteil 1 gehalten. Das zweite Gehäuseteil 2 stellt an seinem Außenumfang eine korrespondierende Kontaktfläche bereit, mit der die Dichtschnur 6 in Dichtkontakt steht. Konkret ist die Dichtschnur 6 in einer an dem ersten Gehäuseteil 1 vorliegenden Aufnahmenut 64 angeordnet, wobei die Aufnahmenut 64 insbesondere an dem Kragen des Übergriffsabschnitts 8 ausgebildet ist. Die Dichtschnur 6 der Umfangsdichtung 5 wirkt radial.

Das Elektrohandwerkzeug 10 weist ferner an seinem zweiten Gehäuseteil 2 umfassend die Griffeinheit einen Handgriff 23 sowie ein elektrisches Anschlusskabel 22 auf, das die zum Betrieb der Motor-Getriebeeinheit nötige Energie liefert. In einer nicht figurativ gezeigten Ausführungsform kann das Elektrohandwerkzeug 10 auch als Akkugerät ausgeführt sein und einen elektrischen Energiespeicher aufweisen.

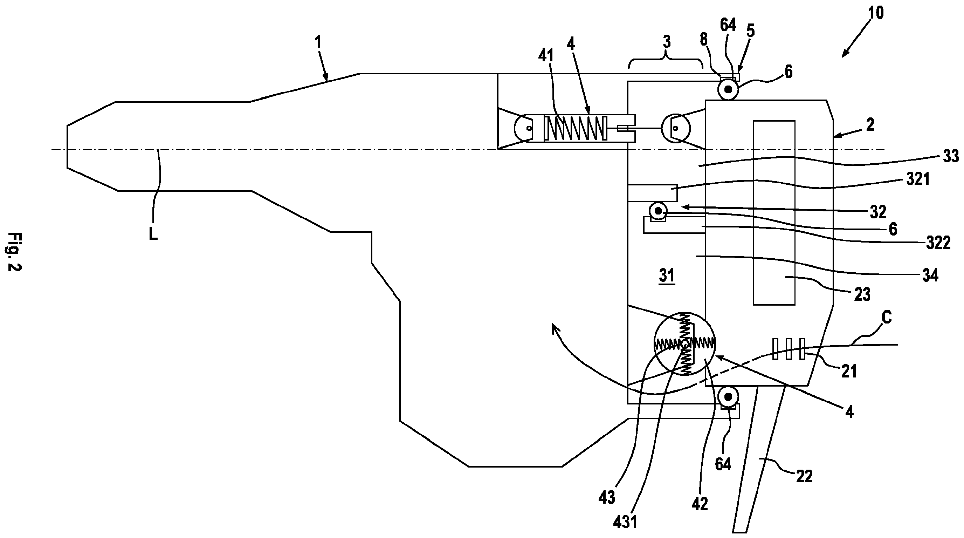

Das in **Fig. 2** dargestellte erfindungsgemäße Elektrohandwerkzeug 10 gemäß einer zweiten Ausführungsform unterscheidet sich von der ersten Ausführungsform dadurch, dass das Luftschott 32 nicht durch ein Schaummaterial gebildet ist, sondern ebenfalls eine Dichtschnur 6 umfasst. Das Luftschott 32 umfasst eine erste, dem ersten Gehäuseteil 1 zugeordnete Trennwand 321 sowie eine zweite, dem zweiten Gehäuseteil 2 zugeordnete Trennwand 322. Die erste Trennwand 321 und die zweite Trennwand 322 überlappen einander in Längsrichtung L teilweise und sind in Querrichtung zueinander beabstandet. Die zweite Trennwand 322 trägt eine Dichtschnur 6, die mit der ersten Trennwand 321 in dichtendem Kontakt stehen. In einer nicht dargestellten Ausführungsform kann die Dichtschnur 6 jedoch auch an der ersten Trennwand 321 vorliegen. Da ein aus Schaummaterial gefertigtes Luftschott 32 in erheblichem Maße Schwingungen vom ersten 1 auf das zweite Gehäuseteil 2 überträgt, kann durch die Ausführung des Luftschotts 32 mit einer Dichtschnur 6 die Schwingungsentkopplung des zweiten Gehäuseteils 2 mit der Griffeinheit noch weiter verbessert werden.

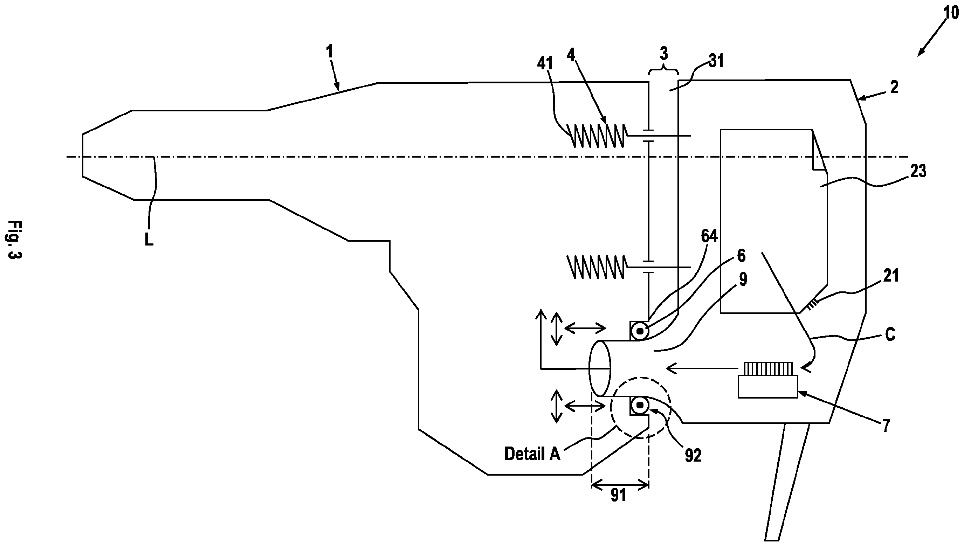

Das in **Fig. 3** in einem schematischen Längsschnitt dargestellte Elektrohandwerkzeug 10 in Form eines Bohrhammers 10 gemäß einer dritten Ausführungsform unterscheidet sich von den ersten beiden Ausführungsformen maßgeblich durch eine unterschiedliche Luftführung des Ansaugluftpfads C der Luftführungsanordnung. Der Schnittstellenbereich 3 liegt hierbei nicht im Ansaugluftpfad C, sondern wird gewissermaßen überbrückt. Die Ansaugung der Kühlluft des Ansaugluftpfads C erfolgt weiterhin durch in dem zweiten Gehäuseteil 2 vorgesehene Ansaugöffnungen 21. Jedoch weist die Luftführungsanordnung eine Ansaugluftleitung 9 auf, durch die ein Abschnitt des Ansaugluftpfads C verläuft. Die Ansaugluftleitung 9 erstreckt sich in dem Schnittstellenbereich 3 zumindest abschnittsweise von dem zweiten Gehäuseteil 2 in das erste Gehäuseteil 1 und überbrückt dabei den Luftspalt 31. Genauer erstreckt sich die Ansaugluftleitung 9 auf einem Eintauchabschnitt 91 von dem zweiten Gehäuseteil 2 in das erste Gehäuseteil 1. Die Ansaugluftleitung 9 ist über eine Ansaugluftleitungsdichtung 92 gegenüber dem ersten Gehäuseteil 1 abgedichtet, wobei die Ansaugluftleitungsdichtung 92 eine Dichtschnur 6 umfasst. Die Dichtschnur 6 der Ansaugluftleitungsdichtung 92 ist als radial wirksame Dichtschnur 6 ausgebildet, um die im Schnittstellenbereich 3 auftretenden Relativbewegungen der beiden Gehäuseteile 1,2 optimal ausgleichen zu können. Da der Luftspalt 31 des Schnittstellenbereichs 3 gemäß dieser Ausführungsform nicht im Ansaugluftpfad C liegt, ist eine Trennung des Schnittstellenbereichs 3 in Unterdruckbereich und Überdruckbereich nicht erforderlich, sodass in der Folge das Luftschott entfallen kann. Gemäß dieser Ausführungsform ist daher der positive Effekt auf die Schwingungsentkopplung des zweiten Gehäuseteils 2 umfassend die Griffeinheit maximiert.

Der Ansaugluftpfad C verläuft im zweiten Gehäuseteil 2 umfassend die Griffeinheit über eine operativ mit der Motor-Getriebeeinheit gekoppelte Elektronikbaugruppe 7, die in der Griffeinheit angeordnet sein kann. Die Elektronikbaugruppe 7 wird in einem Betriebszustand des Elektrohandwerkzeugs 10 von einem durch den Ansaugluftpfad C geführten Kühlluftstrom überstrichen, sodass in der Elektronikbaugruppe 7 entstehende Wärmelasten wirksam abgeführt werden können.

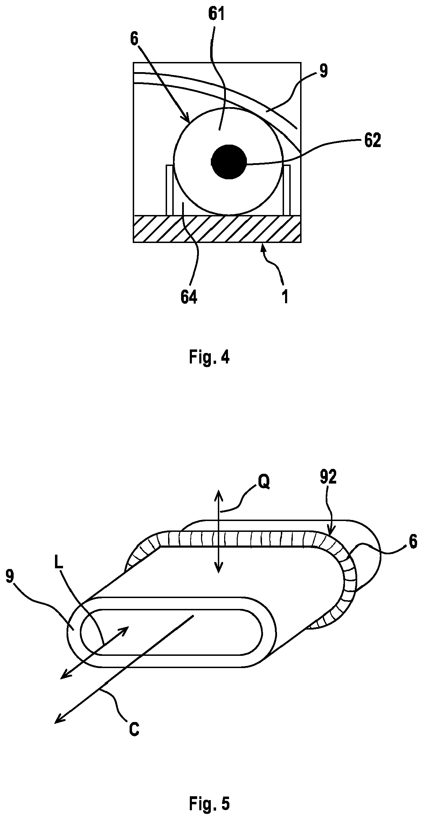

**Fig. 4** zeigt Detail A aus Fig. 4, wobei insbesondere die Aufnahmenut 64, in der die Dichtschnur 6 aufgenommen ist, gut zu erkennen ist. Die Aufnahmenut 64 ist am ersten Gehäuseteil 1 ausgebildet und stellt einen Aufnahmeraum für die Dichtschnur 6 bereit. Die Aufnahmenut 64 umfasst einen Nutgrund sowie zwei in Längsrichtung L beabstandete Nutwände, sodass eine Verformung der Dichtschnur 6 in Längsrichtung L sowie deren Verlagerung nach radial außen unterbunden ist. Die Aufnahmenut 64 lässt ausschließlich eine Verformung eines Innenquerschnitts der Dichtschnur 6 in Wirkrichtung, nämlich in Radialrichtung, zu. Die Dichtschnur 6 liegt mit Ihrem Dichtmantel 61 dichtend an einem Außenumfang der Ansaugluftleitung 9 an. Das Verformungs- und Rückstellvermögen der Dichtschnur ist dabei so bemessen, dass diese die Relativbewegungen zwischen den beiden Gehäuseteilen 1,2 im Schnittstellenbereich 3 zuverlässig kompensieren kann und so über den gesamten Bereich der im Betrieb des erfindungsgemäßen Elektrohandwerkzeugs zu erwartenden relativen Lagemaxima der Gehäuseteile 1,2 eine sichere und reibungsarme Abdichtung bereitstellen kann.

**Fig. 5** zeigt Detail A aus Fig. 4 in einer isometrischen Ansicht. Hierbei ist der Bereich der Abdichtung der Ansaugluftleitung 9 gegenüber dem ersten Gehäuseteil (das erste Gehäuseteil sowie die Aufnahmenut sind nicht gezeigt)
durch die als Dichtschnur 6 ausgeführte Ansaugluftleitungsdichtung 92 in vergrößerter Ansicht schematisch dargestellt. Die Dichtschnur 6 überbrückt einen Radialspalt zwischen dem Nutgrund der Aufnahmenut 64 des ersten Gehäuseteils 1 und der Ansaugluftleitung 9 und liegt dichtend an einem Außenumfang der Ansaugluftleitung 9 an. Dies ermöglicht eine optimale relative Bewegungsfreiheit der am zweiten Gehäuseteil 2 angeordneten Ansaugluftleitung 9 gegenüber dem ersten Gehäuseteil 1, sowohl in Längsrichtung L als auch in Querrichtung Q.

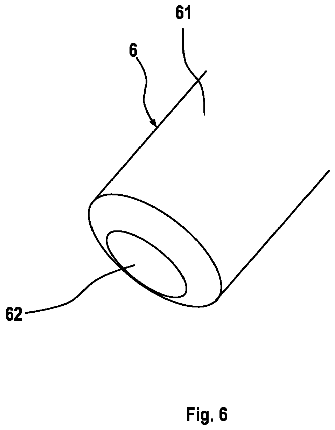

**Fig. 6** zeigt eine Detailansicht einer Dichtschnur 6 eines erfindungsgemäßen Elektrohandwerkzeugs 10. Die Dichtschnur 6 umfasst einen elastischen Kern 62, um den ein als Fasermantel 61 ausgebildeter Dichtmantel 61 gewickelt und/oder geflochten ist. In einer nicht figurativ gezeigten Ausführungsform kann der Dichtmantel 61 jedoch auch auf den Kern 62 beschichtet, aufgetragen, angeschäumt oder anderweitig mantelförmig auf dem Kern 62 angebracht sein. Der elastische Kern 62 ist dazu ausgebildet, elastisch Rückstellkräfte zur Erreichung der Dichtwirkung bereitzustellen, sodass die Dichtschnur 6 ihre Dichtfunktion zuverlässig über die gesamte Lebensdauer des Elektrohandwerkzeugs 10 ausüben kann. Der elastische Kern 62 ist in der gezeigten besonderen Ausführungsform hohl. Der als Fasermantel 61 ausgebildete Dichtmantel 61 ist für die angestrebte Abdichtungswirkung und die geringen Reibkräfte im Dichtkontakt verantwortlich. Der Fasermantel 61 kann insbesondere mehrere übereinander gewickelte und/oder geflochtene Faserlagen umfassen, was die Dichtwirkung weiter verbessert. Die Dichtschnur 6 kann zum Einsatz in einem erfindungsgemäßen Elektrohandwerkzeug insbesondere aufwands- und kostengünstig in Form von Meterware beschafft werden und in der Produktion auf das individuell erforderliche Längenmaß beschnitten werden. In Ausführungen können die jeweiligen freien Enden eines Dichtschnur-Abschnitts vor dem Verbau miteinander verbunden werden um eine umfänglich geschlossene Dichtschnur zu erhalten, die eine besonders wirksame vollumfängliche Abdichtung erlaubt.

### BEZUGSZEICHENLISTE

- 10: Elektrohandwerkzeug / Bohrhammer
- 1: Erstes Geräteteil/Gehäuseteil mit Motor-Getriebeeinheit
- 2: Zweites Geräteteil/Gehäuseteil mit Griffeinheit
- 21: Ansaugöffnung
- 22: Anschlusskabel
- 23: Handgriff
- 3: Schnittstellenbereich
- 31: Luftspalt
- 32: Luftschott
- 321: Trennwand
- 322: Trennwand
- 33: Überdruckbereich
- 34: Unterdruckbereich
- 4: Vibrationsminderungsvorrichtung
- 41: Federelement
- 42: Dämpfungselement / Rotationsdämpfungselement
- 43: Gelenk
- 431: Drehpunkt
- 5: Umfangsdichtung
- 6: Dichtschnur
- 61: Dichtmantel / Fasermantel
- 62: elastischer Kern
- 64: Aufnahmenut
- 7: Elektronikbaugruppe
- 8: Übergriffsabschnitt
- 9: Ansaugluftleitung
- 91: Eintauchabschnitt
- 92: Ansaugluftleitungsdichtung

- L: Längsachse / Werkzeugachse
- Q: Querrichtung
- C: Ansaugfluidpfad/Ansaugluftpfad

## Patentansprüche

1. Elektrohandwerkzeug (10), insbesondere Bohrhammer (10), aufweisend zwei relativ zueinander beweglich gelagerte Geräteteile (1,2), wobei ein erstes Geräteteil (1) eine Motor-Getriebeeinheit mit einer Werkzeugaufnahme umfasst und ein zweites Geräteteil (2) eine Griffeinheit umfasst, wobei das erste (1) und das zweite Geräteteil (2) über zumindest eine Vibrationsminderungsvorrichtung (4) miteinander gekoppelt sind und in einem Schnittstellenbereich (3) durch einen Luftspalt (31) beabstandet aneinander grenzen, wobei in dem Schnittstellenbereich (3) zumindest ein Dichtelement vorliegt,
**dadurch gekennzeichnet, dass**
das Dichtelement eine Dichtschnur (6) aufweist, die einen elastischen Kern (62) sowie einen Dichtmantel (61) umfasst.

2. Elektrohandwerkzeug (10) nach Anspruch 1, umfassend ein Gehäuse mit einem ersten Gehäuseteil (1), das das erste Geräteteil (1) bildet, und mit einem zweiten Gehäuseteil (2), das das zweite Geräteteil (2) bildet.

3. Elektrohandwerkzeug (10) nach Anspruch 1, umfassend ein Sub-Chassis, das die Motor-Getriebeeinheit mit der Werkzeugaufnahme umfasst und das erste Geräteteil (1) bildet, sowie ein Gehäuse, in dem das Sub-Chassis angeordnet ist und das zweite Geräteteil (2) bildet.

4. Elektrohandwerkzeug (10) nach Anspruch 2 oder 3, wobei innerhalb des Gehäuses eine Fluidführungsanordnung, insbesondere Luftführungsanordnung, vorliegt, die einen insbesondere mit der Motor-Getriebeeinheit gekoppelten Luftstromerzeuger umfasst, wobei die Fluidführungsanordnung, insbesondere Luftführungsanordnung, einen Ansaugfluidpfad (C), insbesondere Ansaugluftpfad (C), umfasst, der zumindest abschnittsweise durch den Schnittstellenbereich (3) verläuft.

5. Elektrohandwerkzeug (10) nach Anspruch 4, wobei die Fluidführungsanordnung, insbesondere Luftführungsanordnung, zumindest eine Ansaugöffnung (21) in dem Gehäuse umfasst, die fluidisch mit dem Ansaugfluidpfad (C), insbesondere Ansaugluftpfad (C), verbunden ist, wobei die Ansaugöffnung (21) stromaufwärts des Schnittstellenbereichs (3) vorliegt.

6. Elektrohandwerkzeug (10) nach Anspruch 4 oder 5, wobei in dem Gehäuse eine operativ mit der Motor-Getriebeeinheit gekoppelte Elektronikbaugruppe (7) vorliegt, die zumindest abschnittsweise in dem Ansaugfluidpfad (C) liegt.

7. Elektrohandwerkzeug (10) nach einem der Ansprüche 4 bis 6, wobei in dem Schnittstellenbereich (3) ein Unterdruckbereich (34), aufweisend einen Abschnitt des Ansaugfluidpfads (C), sowie ein Überdruckbereich (33) vorliegt, die durch ein Luftschott (32) getrennt sind, wobei insbesondere das Luftschott (32) eine Dichtschnur (6) aufweist, die einen elastischen Kern (62) sowie einen Dichtmantel (61) umfasst.

8. Elektrohandwerkzeug (10) nach einem der vorigen Ansprüche, wobei in dem Schnittstellenbereich (3) eine Umfangsdichtung (5) vorliegt, die das erste (1) und das zweite Geräteteil (2) zumindest teilumfänglich gegeneinander abdichtet, wobei insbesondere die Umfangsdichtung (5) eine Dichtschnur (6) aufweist, die einen elastischen Kern (62) sowie einen Dichtmantel (61) umfasst.

9. Elektrohandwerkzeug (10) nach einem der Ansprüche 2 bis 6, wobei die Fluidführungsanordnung zumindest eine Ansaugluftleitung (9) aufweist, die sich in dem Schnittstellenbereich (3) zumindest abschnittsweise von dem ersten (1) in das zweite Geräteteil (2) oder von dem zweiten (2) in das erste Geräteteil (1) erstreckt und dabei den Luftspalt (31) überbrückt, wobei durch die Ansaugluftleitung (9) ein Abschnitt des Ansaugfluidpfads (C) verläuft, wobei insbesondere die Ansaugluftleitung (9) gegenüber dem Geräteteil (1,2), in das diese sich erstreckt, durch eine Dichtschnur (6) abgedichtet ist, die einen elastischen Kern (62) sowie einen Dichtmantel (61) umfasst.

10. Elektrohandwerkzeug (10) nach einem der vorigen Ansprüche, wobei das zweite Geräteteil (2) zumindest entlang einer Werkzeugachse (L) der Motor-Getriebeeinheit gegenüber dem ersten Geräteteil (1) beweglich gelagert ist.

11. Elektrohandwerkzeug (10) nach einem der vorigen Ansprüche, wobei das zweite Geräteteil (2) über zumindest ein Gelenk (43) schwenkbar an dem ersten Geräteteil (1) gelagert ist, wobei das Gelenk (43) insbesondere das Dämpfungselement (42), insbesondere ein Rotationsdämpfungselement (42), umfasst.

12. Elektrohandwerkzeug (10) nach einem der vorigen Ansprüche, wobei zumindest ein Bestandteil der Vibrationsminderungsvorrichtung (4) in dem Schnittstellenbereich (3) vorliegt, insbesondere wobei das zumindest eine Federelement (41) und/oder das zumindest eine Dämpfungselement (42) der Vibrationsminderungsvorrichtung (4) oder eine mit dem zumindest einen Federelement (41) und/oder dem zumindest einen Dämpfungselement (42) der Vibrationsminderungsvorrichtung (4) verbundene Kraftleitstruktur in dem Schnittstellenbereich (3) vorliegt.

13. Elektrohandwerkzeug (10) nach einem der vorigen Ansprüche, wobei der Dichtmantel (61) der Dichtschnur (6) ein Fasermantel (61) ist, der um den elastischen Kern (62) gewickelt und/oder geflochten ist, insbesondere kreuzförmig gewickelt und/oder geflochten, und/oder wobei der elastische Kern (62) hohl ist.

14. Elektrohandwerkzeug (10) nach Anspruch 13, wobei der Fasermantel (61) der Dichtschnur (6) eine Vielzahl insbesondere synthetischer Fasern aufweist, wobei die Fasern insbesondere ein Polyamid, etwa ein Aramid, oder Polytetrafluorethylen umfassen oder daraus bestehen.

15. Elektrohandwerkzeug (10) nach einem der vorigen Ansprüche, wobei der elastische Kern (62) der Dichtschnur (6) ein Elastomer, thermoplastisches Elastomer oder einen Kautschuk umfasst oder daraus besteht, insbesondere ein Polyurethan oder ein Ethylen-Propylen-Dien-Kautschuk.
